# EUROPEAN PATENT SPECIFICATION

(11) **EP 2 124 521 B1**
(45) Date of publication and mention of the grant of the patent: **15.05.2019**
(21) Application number: 07704142.4
(22) Date of filing: 25.01.2007
(51) Int. Cl.: A01G 24/00, A01G 24/18

(54) **HYDROPONICS GROWING MEDIUM**
HYDROKULTUR-WACHSTUMSMEDIUM
MILIEU DE CROISSANCE HYDROPONIQUE

(43) Date of publication of application: 02.12.2009
(73) Proprietor: Knauf Insulation, 4600 Visé (BE)
(72) Inventor: JACKSON, Roger, St Helens Merseyside WA10 3NS (GB); AINDOW, Tony, St Helens Merseyside WA10 3NS (GB); BAYBUTT, George, St Helens Merseyside WA10 3NS (GB)
(74) Representative: ARC-IP
(86) International application number: PCT/EP2007/050748
(87) International publication number: WO 2008/089849

(56) References cited:
- EP-A- 1 038 433
- WO-A1-99/47765
- WO-A2-2007/014236
- JP-A- 2004 060 058
- US-A- 4 912 147
- US-A1- 2007 027 283

## Description

This invention relates to a mineral fibre product, particularly for hydroponics applications and particularly having a low phenol or phenol free binder.

Industry standard binders used for mineral fibre products, for example of glass wool and rock wool, are based on phenol formaldehyde resins. Such binders are required to hold the mineral fibres together in the form of a mat or block.

The presence of a binder in a hydroponics growing medium may be detrimental to plant growth, particularly due to the presence and/or release of phenol. However, in the water soaked hydroponics growing conditions, the presence of a binder is necessary to keep the mineral fibres bound together.

One example of a mineral wool substrate for soilless cultivation is disclosed in EP1038433A. WO99/47765A1 relates to a process for the preparation of a mineral fibre product comprising zones of different densities and discloses the use of such products as a plant growth medium.

According to one aspect, the present invention provides a hydroponics growing medium as defined in claim 1. Other aspects are defined in other independent claims. Preferred and/or alternative features are defined in the dependent claims.

The Weathered Interlaminar Strength gives an indication of the ability of the growing medium to remain in tact as a block or mat when in contact with irrigation water in plant growing conditions. The Weathered Interlaminar Strength may be greater than 5 kilopascals; this may allow the growing medium to have sufficient physical integrity to be used for more than one or even more than two growing cycle rather than being discarded after a single use.

The low (preferably zero) phenol content may provide a better plant growing environment, particularly in the seedling or early part of the plant growing cycle. The growing medium may be phenol free or substantially phenol free; preferably the binder is phenol free or substantially phenol free.

As used herein, reference to phenol content is in terms of the presence of free phenol and/or low molecular weight phenol; the term phenol free means that there is substantially no free phenol or low molecular weight phenol present and preferably less than one part per million by weight.

The phenol content may be measure by gas chromatography.

Preferably, the hydroponics growing medium of the present invention provides for improved plant vigour when compared with know mineral fibre growing mediums, particularly those having phenol contents greater than the present invention. Plant vigour may be assessed in a comparative growing test, for example with cucumber plants (cultivar aviance) sown in 10 cm x 10 cm x 6.5cm of hydroponics mineral wool blocks and grown in controlled hydroponics conditions. Leaf size 31 days and/or 42 days after sowing may be used as an indication of plant vigour, preferably using statistical analysis. The growing conditions for such a test preferably include:
- Controlled glass house conditions
- Supplementary lighting for 16 hours per day between 0400 and 2000 hours
- Watering once a day with nutrients applied in the irrigation water
- Growing cubes grouped together for the first 20 days and then re-spaced at approximately 25 cm centres; subsequently re-spaced twice before being strung on supporting wires after 38 days from sowing, the positions of the plants being changed each time they are re-spaced or strung to reduce positional effects.
- glasshouse temperature initially set at 24°C until first spacing and then reduced to 23°C, with ventilation 1°C above the set points

The nature of the binder may allow increased binder contents, for example of 4% by weight or more, to be used without having an adverse effect upon plant growth. The binder content may be greater than or equal to 4.5%, 5%, 5.5%, 6%, 6.5%, 7%, 7.5%, 8% or 9% by weight. The binder content is expressed as a weight % when cured in the growing medium as ready for use and may be measured and/or expressed as loss on ignition. The loss on ignition is expressed as a percentage calculated from (weight loss on ignition i.e. weight of binder)/total weight before ignition.

The binder comprises at least one Maillard reaction product and may:
- be based on a reducing sugar; and/or
- be based on reductosis; and/or
- be based on an aldehyde containing sugars/and/or
- include at least one reaction product of a carbohydrate reactant and an amine reactant; and/or
- include at least one reaction product of a reducing sugar and an amine reactant; and/or
- include at least one reaction product of a carbohydrate reactant and a polycarboxylic acid ammonium salt reactant.

The binder may be based on a combination of a polycarboxylic acid, for example citric acid, a sugar, for example dextrose, and a source of ammonia, for example ammonia solution. It may be based on a combination of ammonium citrate and dextrose. Where the binder is based on sugars and/or citric acid and or comprises significant -OH groups, it is particularly surprising that such levels of Weathered Interlaminar Strength can be achieved. It would have been thought that the -OH groups for example in the sugars and/or citric acid would be readily subject to hydrolysis and that the binder would consequently loose significant strength in wet or humid conditions. The properties of the present invention are also surprising as traditionally proposed polyester based binder systems are generally regarded as being susceptible to hydrolysis and so lacking in mechanical performance under wet or humid conditions.

The binder may comprise a silicon containing compound, particularly a silane; this may be an amino-substituted compound; it may be a silyl ether; it may facilitate adherence of the binder to the mineral fibres.

The binder may comprise melanoidins; it may be a thermoset binder; it may be thermally curable.

The binder may be one of those disclosed in International patent application n° PCT/US2006/028929.

Deriving the binder from or essentially from natural and/or sustainable raw materials, that is to say for example crops, plants or products derived therefrom as opposed for example to petrochemicals, may reduce the risk of introducing potentially undesirable compounds in to the growing medium; it may also be ecologically desirable.

The mineral fibres are preferably rock wool; they may be glass wool. They are preferably crimped; they may have an average diameter between 2 and 9 microns.

The growing medium may have
- a nominal thickness in the range 50-100 mm; and/or
- a density in the range 30-100 kg/m³, particularly 50-80 kg/m³

A non-limiting example of the invention is described below.

An aqueous binder was prepared by mixing together:

| | Approximate % by weight |
|---|---|
| Powdered dextrose monohydrate | 29.8% |
| Powdered anhydrous citric acid | 5.3% |
| 28% aqueous ammonia | 6.0% |
| Silane A-1100 | 1.0% |
| Surfactant | 6.2% |
| Water | 52.5% |

This phenol free binder was used in the manufacture of a growing medium of rock wool on a standard rock wool manufacturing line, the binder being sprayed onto the fibres just after fiberising and the coated fibres being collected, assembled in to a mat, compressed and cured in the usual way.

The phenol free growing medium had:
- a binder content of about 5% by weight as determined by loss on ignition
- a thickness of about 65 mm
- a density of about 75 kg/m³

Desired characteristics and results achieved are set out in Table 1:

**Table 1**

| | Units | Acceptance limit | Preferred | More Preferred | Most preferred | Result achieved |
|---|---|---|---|---|---|---|
| Weathered Interlaminar strength | Kilopascals | ≥4 | ≥5 | ≥7.5 | ≥10 | 9.2 |

### Testing of Weathered Interlaminar Strength:

The test is carried out on mineral fibre mats which have been subjected to the following accelerated weathering procedure: five samples to be tested are placed in a preheated autoclave and conditioned on a wire mesh shelf away from the bottom of the chamber under wet steam at 35kN/m² for one hour. They are then removed, dried in an oven at 100°C for five minutes and tested immediately for interlaminar strength.

The interlaminar strength is the tensile strength of the mineral fibre material in the direction substantially perpendicular to the principle plane in which the fibres have been deposited or are orientated. It is determined in accordance with European Standard EN1607 of November 1996 (incorporated herein by reference) with the following details and/or variations:
- the thickness of the samples is the thickness as commercialised
- the dimensions of the faces secured to the tensile testing machine are preferably 100mm x 150mm; samples having these dimensions are cut from the hydroponics growing medium as commercialised. Smaller dimensions may be used if the hydroponics growing medium is only commercialised in smaller dimensions.
- The adhesive used to secure the samples to the testing apparatus is preferably a hot melt adhesive

The Interlaminar strength is calculated as the mean average of the tensile strength of the five samples tested.

## Claims

1. A hydroponics growing medium comprising mineral fibres and an organic binder, **characterised in that** the growing medium has a Weathered Interlaminar Strength of at least 4 kilopascals and a phenol content of less than or equal to 0.01 % by weight and in which the organic binder comprises at least one Maillard reaction product.

2. A hydroponics growing medium in accordance with claim 1, in which the Weathered Interlaminar Strength is at least 5 kilopascals, preferably at least 7.5 kilopascals.

3. A hydroponics growing medium in accordance with any preceding claim, in which the phenol content is less than 0.005 by weight, preferably less than 0.001 % by weight.

4. A hydroponics growing medium in accordance with any preceding claim, in which the binder is substantially phenol free.

5. A hydroponics growing medium in accordance with any preceding claim, in which the binder content is in the range 2 to 10 % by weight.

6. A hydroponics growing medium in accordance with any preceding claim, in which the binder content is greater than 4% by weight.

7. A hydroponics growing medium in accordance with any preceding claim, in which the binder is based on a reducing sugar.

8. A hydroponics growing medium in accordance with any preceding claim, in which the binder is based on an aldehyde containing sugars.

9. A hydroponics growing medium in accordance with any preceding claim, in which the binder includes at least one reaction product of a carbohydrate reactant, notably a reducing sugar, and an amine reactant.

10. A hydroponics growing medium in accordance with any preceding claim, in which the binder includes at least one reaction product of a carbohydrate reactant and a polycarboxylic acid ammonium salt reactant.

11. A hydroponics growing medium in accordance with any preceding claim, in which the binder is based on reaction products obtained by curing an aqueous solution comprising citric acid, ammonia and dextrose.

12. A hydroponics growing medium in accordance with any preceding claim, in which the binder is derived essentially from natural and/or sustainable raw materials.

13. A method of growing a plant, **characterised in that** the plant is grown in a hydroponics growing medium according to any proceeding claim.

14. Use of a mineral fibre product comprising mineral fibres and an organic binder and having a Weathered Interlaminar Strength of at least 7.5 kilopascals and a phenol content of less than or equal to 0.01 % by weight and in which the organic binder comprises at least one Maillard reaction product as a hydroponics growing medium.

15. Use in accordance with claim 14, in which the binder is based on a reducing sugar.

## Patentansprüche

1. Hydrokulturwachstumsmedium, umfassend Mineralfasern und ein organisches Bindemittel, **dadurch gekennzeichnet, dass** das Wachstumsmedium eine interlaminare Festigkeit unter Witterungsbedingungen von mindestens 4 Kilopascal und einen Phenolgehalt von weniger als oder gleich 0,01 Gewichts-% aufweist und wobei das organische Bindemittel mindestens ein Maillard-Reaktionsprodukt umfasst.

2. Hydrokulturwachstumsmedium nach Anspruch 1, wobei die interlaminare Festigkeit unter Witterungsbedingungen mindestens 5 Kilopascal, bevorzugt mindestens 7,5 Kilopascal, beträgt.

3. Hydrokulturwachstumsmedium nach einem der vorstehenden Ansprüche, wobei der Phenolgehalt weniger als 0,005 Gewichts-%, bevorzugt weniger als 0,001 Gewichts-%, beträgt.

4. Hydrokulturwachstumsmedium nach einem der vorstehenden Ansprüche, wobei das Bindemittel im Wesentlichen frei von Phenol ist.

5. Hydrokulturwachstumsmedium nach einem der vorstehenden Ansprüche, wobei der Bindemittelgehalt im Bereich von 2 bis 10 Gewichts-% liegt.

6. Hydrokulturwachstumsmedium nach einem der vorstehenden Ansprüche, wobei der Bindemittelgehalt größer als 4 Gewichts-% ist.

7. Hydrokulturwachstumsmedium nach einem der vorstehenden Ansprüche, wobei das Bindemittel auf Basis eines reduzierenden Zuckers ist.

8. Hydrokulturwachstumsmedium nach einem der vorstehenden Ansprüche, wobei das Bindemittel auf Basis Aldehyd-haltiger Zucker ist.

9. Hydrokulturwachstumsmedium nach einem der vorstehenden Ansprüche, wobei das Bindemittel mindestens ein Reaktionsprodukt eines Kohlenhydrat-Edukts, insbesondere eines reduzierenden Zuckers, und eines Amin-Edukts einschließt.

10. Hydrokulturwachstumsmedium nach einem der vorstehenden Ansprüche, wobei das Bindemittel mindestens ein Reaktionsprodukt eines Kohlenhydrat-Edukts und eines Polycarbonsäureammoniumsalz-Edukts einschließt.

11. Hydrokulturwachstumsmedium nach einem der vorstehenden Ansprüche, wobei das Bindemittel auf Basis von Reaktionsprodukten, erhalten durch Härten einer wässrigen Lösung, umfassend Zitronensäure, Ammoniak und Dextrose, ist.

12. Hydrokulturwachstumsmedium nach einem der vorstehenden Ansprüche, wobei das Bindemittel hauptsächlich von natürlichen und/oder nachhaltigen Rohstoffen abgeleitet ist.

13. Verfahren zum Züchten einer Pflanze, **dadurch gekennzeichnet, dass** die Pflanze in einem Hydrokulturwachstumsmedium nach einem der vorstehenden Ansprüche gezüchtet wird.

14. Verwendung eines Mineralfaserprodukts, umfassend Mineralfasern und ein organisches Bindemittel, und mit einer interlaminaren Festigkeit unter Witterungsbedingungen von mindestens 7,5 Kilopascal und einem Phenolgehalt von weniger als oder gleich 0,01 Gewichts-% und wobei das organische Bindemittel mindestens ein Maillard-Reaktionsprodukt umfasst, als ein Hydrokulturwachstumsmedium.

15. Verwendung nach Anspruch 14, wobei das Bindemittel auf Basis eines reduzierenden Zuckers ist.

## Revendications

1. Milieu de croissance hydroponique, comprenant des fibres minérales et un liant organique, **caractérisé en ce que** le milieu de croissance présente un Weathered Interlaminar Strength d'au moins 4 kilopascal et une teneur en phénol inférieure ou égale à 0,01% en poids et dans lequel le liant organique comprend au moins un produit de réaction de Maillard.

2. Milieu de croissance hydroponique selon la revendication 1, dans lequel le Weathered Interlaminar Strength est d'au moins 5 kilopascal, de préférence au moins 7,5 kilopascal.

3. Milieu de croissance hydroponique selon l'une quelconque des revendications précédentes, dans lequel la teneur en phénol est inférieure à 0,005% en poids, de préférence inférieure à 0,001% en poids.

4. Milieu de croissance hydroponique selon l'une quelconque des revendications précédentes, dans lequel le liant est essentiellement exempt de phénol.

5. Milieu de croissance hydroponique selon l'une quelconque des revendications précédentes, dans lequel la teneur en liant se situe dans l'intervalle allant de 2 à 10% en poids.

6. Milieu de croissance hydroponique selon l'une quelconque des revendications précédentes, dans lequel la teneur en liant est supérieure à 4% en poids.

7. Milieu de croissance hydroponique selon l'une quelconque des revendications précédentes, dans lequel le liant est à base d'un sucre réducteur.

8. Milieu de croissance hydroponique selon l'une quelconque des revendications précédentes, dans lequel le liant est à base de sucres contenant un aldéhyde.

9. Milieu de croissance hydroponique selon l'une quelconque des revendications précédentes, dans lequel le liant comprend au moins un produit de réaction d'un réactif hydrate de carbone, notamment un sucre réducteur, et d'un réactif aminé.

10. Milieu de croissance hydroponique selon l'une quelconque des revendications précédentes, dans lequel le liant comprend au moins un produit de réaction d'un réactif hydrate de carbone et d'un réactif sel d'ammonium de poly(acide carboxylique).

11. Milieu de croissance hydroponique selon l'une quelconque des revendications précédentes, dans lequel le liant est à base de produits de réaction obtenus par durcissement d'une solution aqueuse comprenant l'acide citrique, l'ammoniaque et le dextrose.

12. Milieu de croissance hydroponique selon l'une quelconque des revendications précédentes, dans lequel le liant dérive essentiellement de matières premières naturelles et/ou durables.

13. Procédé de croissance d'une plante, **caractérisé en ce que** la plante est mise à croitre dans un milieu de croissance hydroponique selon l'une quelconque des revendications précédentes.

14. Utilisation de produit de fibres minérales comprenant des fibres minérales et un liant organique, ayant un Weathered Interlaminar Strength d'au moins 7,5 kilopascal et une teneur en phénol inférieure ou égale à 0,01% en poids et dans lequel le liant organique comprend au moins un produit de réaction de Maillard, en tant que milieu de croissance hydroponique.

15. Utilisation selon la revendication 14, dans laquelle le liant est à base d'un sucre réducteur.
